# EUROPEAN PATENT SPECIFICATION

(11) **EP 2 233 426 B1**
(45) Date of publication and mention of the grant of the patent: **12.12.2012**
(21) Application number: 10157007.5
(22) Date of filing: 19.03.2010
(51) Int. Cl.: B66F 9/12, B65G 65/23, B60P 1/28, B60P 1/16, B66F 9/19, B65G 67/34

(54) **Locking mechanism related to a container.**
Sperrmechanismus im Zusammenhang mit einem Container.
Mécanisme de verrouillage associé à un conteneur.

(30) Priority: 24.03.2009 FI 20095304; 30.09.2009 FI 20096002
(43) Date of publication of application: 29.09.2010
(73) Proprietor: Lahtinen, Pertti, 40100 Jyväskylä (FI)
(72) Inventor: Lahtinen, Pertti, 40100 Jyväskylä (FI)
(74) Representative: Helke, Kimmo Kalervo

(56) References cited:
- WO-A1-93/17951
- DE-A1-102006 014 213

## Description

The invention relates to an arrangement for a dumpable interchangeable platform/container, wherein the interchangeable platform/container includes a container base and a wall hatch articulated at the top for dumping the interchangeable platform/container.

For general safety, it is very important that the locking systems of wall hatches in the platforms and containers for road traffic and railway use are sufficiently reliable and secure. A failure of a wall hatch locking can lead to unloading of the transported cargo out of the container in the middle of the transportation. For speeding up the work stages, it would also be important that the hatch could be closed with a locking mechanism.

According to prior art, locking can be implemented with an internal actuator. Using internal actuators in connection with interchangeable platforms/containers is difficult because the actuator requires a source of energy. A locking mechanism equipped with an internal actuator is proposed in Finnish utility model FI 253 in which compressed air is transferred to the actuator from a truck. This mechanism is difficult to use in applications other than trucks. In addition, closing of a slightly open hatch may be problematic particularly manually if the mass transported compacts forming an obstacle.

Publication DE 102006014213 Al present a tilting mechanism for tilting the carrier of a forklift truck used in transporting and loading bulk containers. Publication WO 93/17951 Al presents a tipping device for moving and tipping a platform body or similar container.

The object of this invention is to provide a locking device for containers and interchangeable platforms that is more reliable and universal than before and that allows closing a slightly open wall hatch of the container/interchangeable platform.

The characteristic features of this invention become evident from claim 1.

This object is achieved by providing the arrangement with a latch plunger articulated in the vicinity of said wall hatch and adapted to move against the wall hatch, the latch plunger having an open position for releasing the wall hatch and a lock position for keeping the wall hatch closed. The arrangement includes also a control arm for operating latch plunger adapted to open and close the wall hatch and return means for returning control arm to the lock position. The arrangement further includes a forcing locking mechanism for preventing shifting of a control arm, and an actuator that controls the locking mechanism for opening the locking mechanism. A latch plunger is adapted, upon its closing, to push the partially open wall hatch completely closed.

According to an embodiment, a control arm is articulated to the latch plunger for turning it and the latch plunger is further articulated to the container base in parallel with the wall hatch articulation.

According to an embodiment, the forcing locking mechanism includes a latch articulated to the control arm and a lock detent fastened to the container base, wherein said latch is adapted to turn between the open position and the lock position and the lock detent is adapted against the latch in the lock position to prevent shifting of the latch and the control arm.

According to an embodiment, the actuator is adapted to open the lock mechanism in the initial part of its stroke and to open the latch plunger in the final part of its stroke. Return means are springs.

According to an embodiment, the arrangement is located in the vicinity of a handling device/transport means of an interchangeable platform/container and the actuator is located externally in the handling device/transport means relative to the interchangeable platform/container and is adapted to push the opening detent included in the interchangeable platform/container.

According to an embodiment, the arrangement comprises a screw thread in the first part and a detent adapted thereto in the second part, the first part being fixed while the second part is adapted to be turned with an external actuator for providing shifting of the control arm. Advantageously, the screw thread ends at a holding part without a rise.

The arrangement according to the invention achieves reliable locking of the wall hatch of a container/interchangeable platform which can be easily used by operating an actuator external to the interchangeable platform/container. Forces acting on the wall hatch generated by the cargo are directed to the locking mechanism which is forcibly locked such that it cannot open accidentally, for example, due to vibrations. It is not necessary to lead hydraulic or pneumatic energy to the container/interchangeable platform.

According to an advantageous embodiment, the arrangement can be used in railway transportations, for example, in connection with containers in use or in connection with interchangeable platforms of trucks. Other applications are also possible. It is common for the applications that the actuator is external to the container/interchangeable platform.

The invention is described below by making reference to the enclosed figures, in which:
- Figure 1a: shows an arrangement according to the invention in connection with a machine,
- Figures 2a - 2d: show the construction of a container base,
- Figure 3: is a top view of the container base,
- Figure 4: shows the locking mechanism of the arrangement in a lateral profile view of the container base,
- Figures 5a - 5c: are lateral profile views of the locking mechanism of an arrangement according to an embodiment without a return spring for the latch,
- Figures 6a - 6c: are lateral profile views of the locking mechanism of an arrangement according to another embodiment including a return spring for the locking mechanism,
- Figures 7a - 7b: are lateral profile views of un unloading device,
- Figures 8a - 8b: show the locking mechanism of another arrangement according to the invention in a lateral profile view of the container base,
- Figure 9: shows the position of the actuator of an arrangement according to an embodiment in the unloading device,
- Figure 10: shows an embodiment in which the arrangement is in connection with an interchangeable platform.

The reference numbers in the Figures refer to the following:

| | |
|---|---|
| 10 arrangement | |
| 11 unloading device | 24 lifting form arms |
| 12 support fork arms | 25 transfer arm |
| 14 unloading device frame | 36 cargo space (container/platform) |
| 16 quick-connection detent | |
| 18 container lock | 37 wall hatch |
| 19 actuator | 38 latch plunger |
| 20 dumping cylinder | 39 latch plunger joint |
| 22 lifting fork (frame) | 40 control arm |
| 46 locking cylinder | 72 lock detent |
| 48 locking latch (container) | 74 upper jaw (latch) |
| 52 second arm | 76 lower jaw (latch) |
| 53 pushing detent | 77 forcing locking mechanism |
| 54 hole for locking device | 80 wall hatch locking mechanism |
| 56 container base | |
| 60 return spring (control arm) | 84 opening detent |
| | 86 pipe |
| 62 control arm joint | 88 pin |
| 63 spring hook | 90 screw bar |
| 64 latch | 92 screw thread |
| 65 actuator piston rod | 94 screw thread detent |
| 66 shaft (locking mechanism) | 95 locking mechanism |
| 67 return means | 96 flat bar iron |
| 68 return spring (latch) | 98 turnbuckle screw |
| 69 draw-spring (second arm) | 100 actuator |
| 70 shear surface | |
| 71 latch arm | |

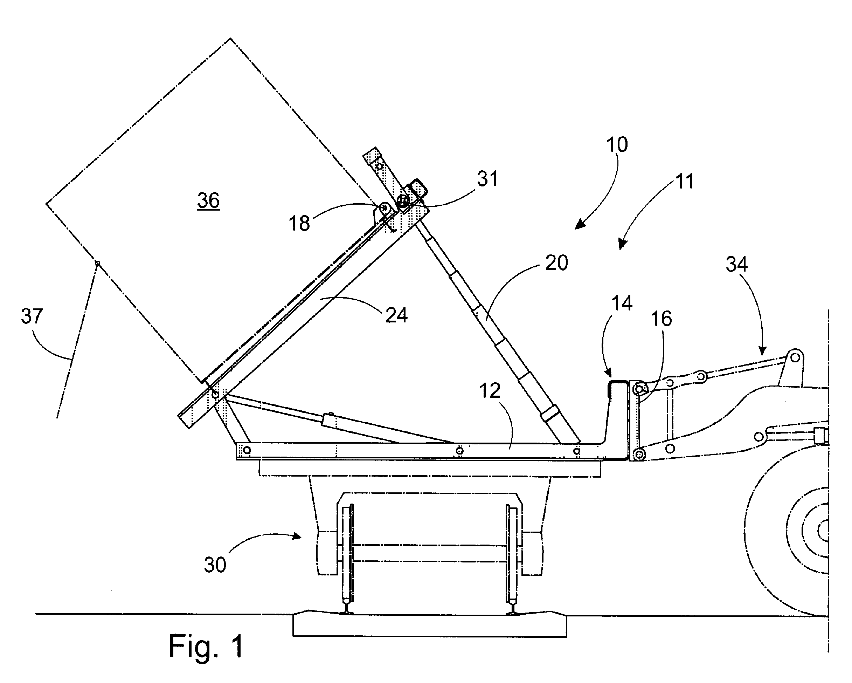

Figure 1 shows an embodiment in which the arrangement is used together with an unloading device 11, which in turn is controlled by a machine 34. The container 36 is tipped for unloading the cargo contained therein whereby the wall hatch 37 included therein is opened. With the arrangement, opening and locking are reliable and fast to perform. For clarity, in the description of Figures, it is only referred to a container 36; however, instead of a container, an interchangeable platform can be used equally.

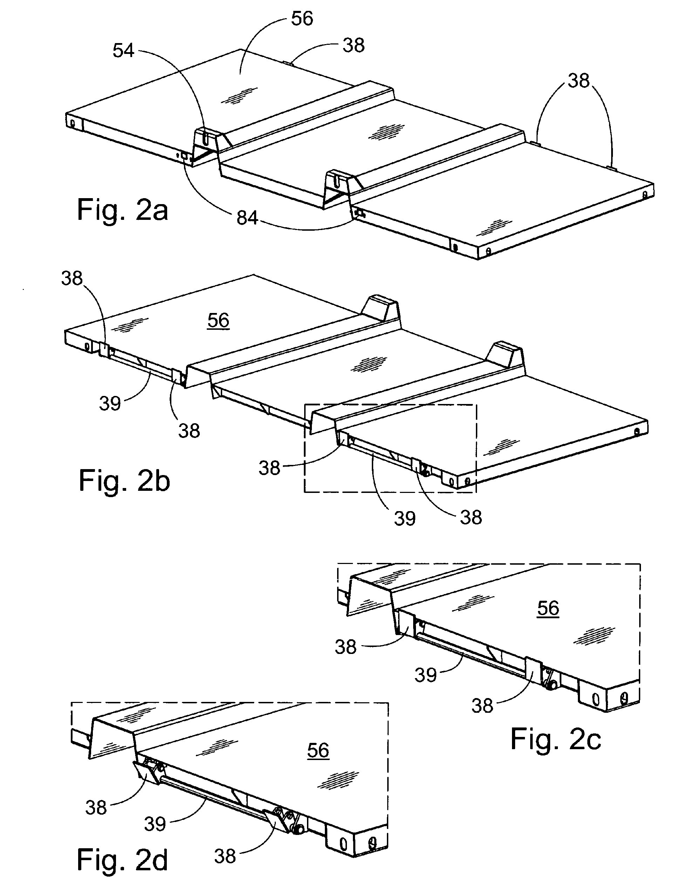

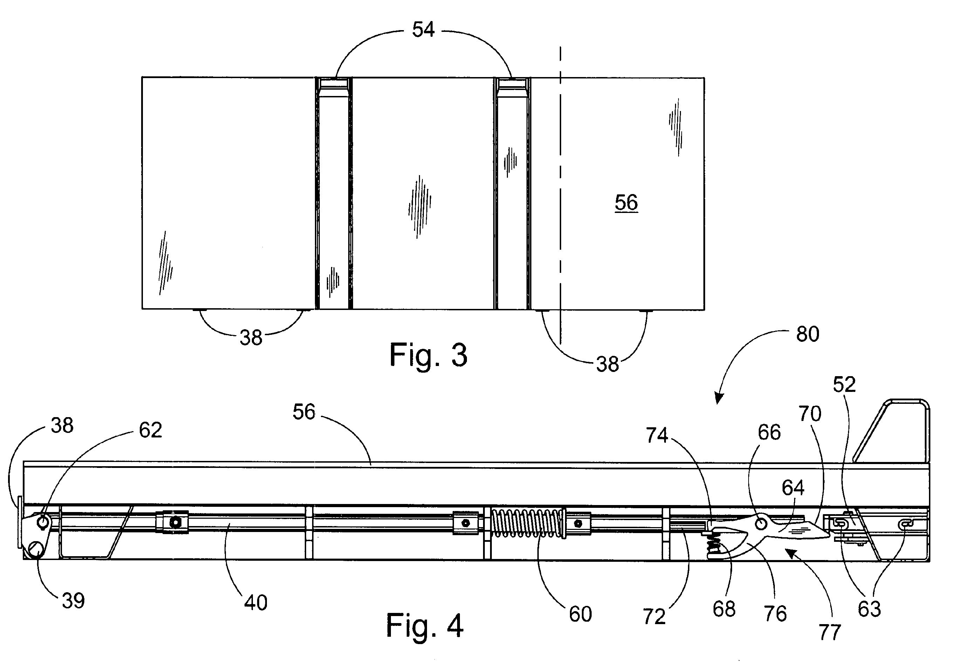

Figures 2a - 2d show a container base 56 according to an embodiment including a locking mechanism for the wall hatch. Figure 2a shows the opening detents 84 of actuator piston rods via which detents the actuators operate the locking mechanism. The container base 56 is provided with locking holes 54 to which the container lock 18 of Figure 1 is connected with locking latches 48. The locking mechanism of the container wall hatch is located inside the container base 56. The wall hatch locking mechanism is operated from the frame side end of the unloading device by the actuator. According to Figure 3, the locking holes 54 of the container base 56 are located on the opposite side of the container base 56 relative to the latch plungers 38.

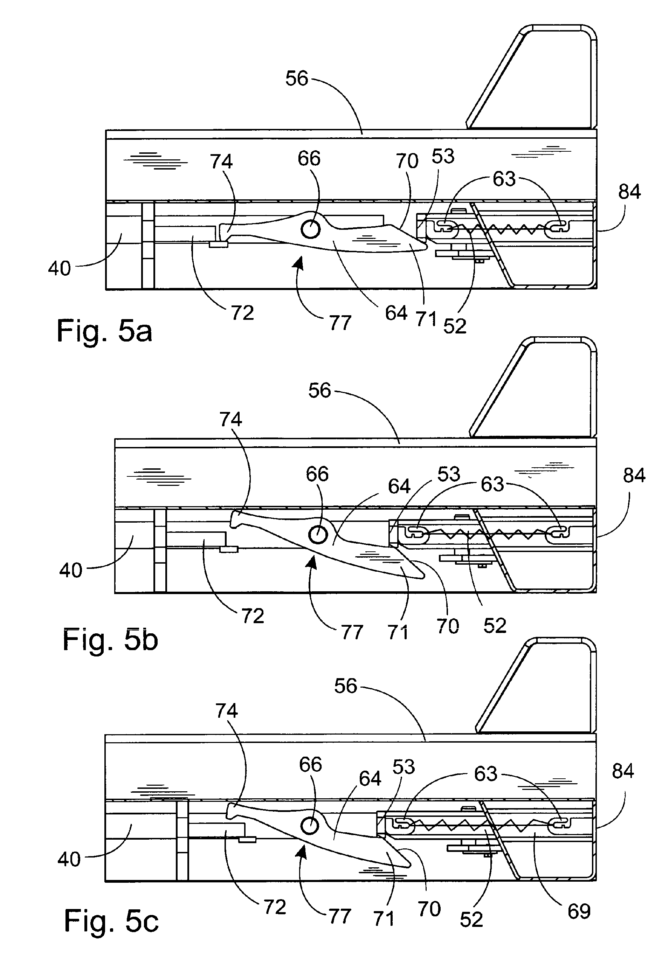

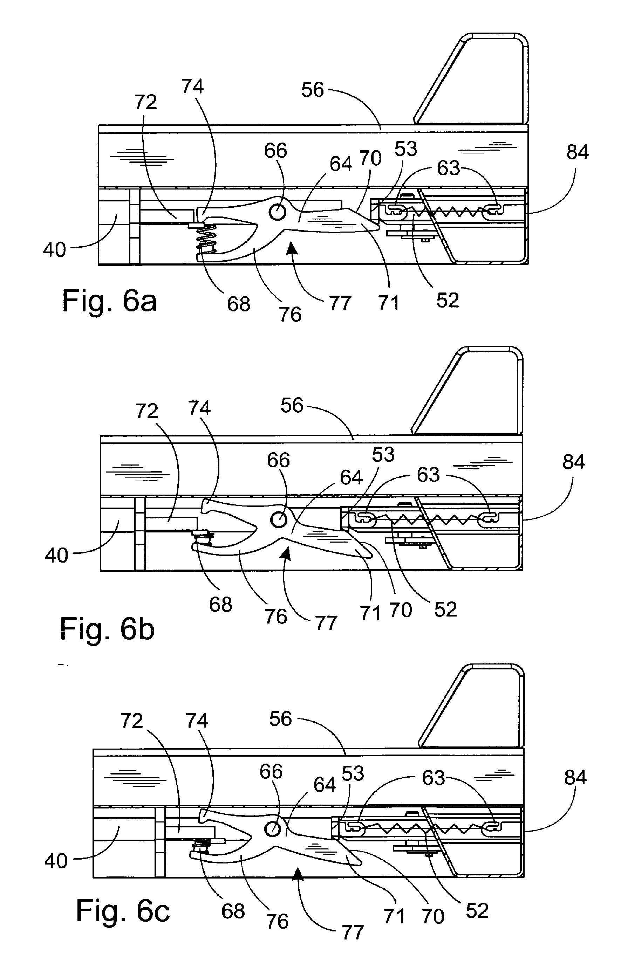

The wall hatch locking mechanism 80 is illustrated in more detail in the profile views 4, 7a and 7b of the container base and the forcing locking mechanism 77 is depicted in Figures 5a - 6c. Figures 5a - 5c show an embodiment in which the latch 64 is not provided with a return spring of its own. Figures 6a - 6c illustrate an embodiment provided with a return spring. According to the figures, the locking mechanism 80 is compactly located inside the container base 56 where it is protected from dents and dirt, which improves its reliability.

As shown in Figure 4, when opening the wall hatch of the container (not shown), the actuator 19, in the first part of its stroke, is adapted to push the other arm 52 which pushes the latch arm 71 included in the latch 64 via the pushing detent 53 at the inclined shear surface 70 thereof. The latch 64 is articulated to the control arm 40 by a shaft 66. The latch arm 71 turns the latch 64 about the shaft 66 whereby the upper jaw 74 of the latch 64 is lifted from the front of the lock detent 72. Once the upper jaw 74 has lifted, the latch 64 is no more an obstacle for the movement of the control arm 40, as shown in Figures 6b and 6c. At the same time, the second arm 52, too, comes in contact with the control arm 40.

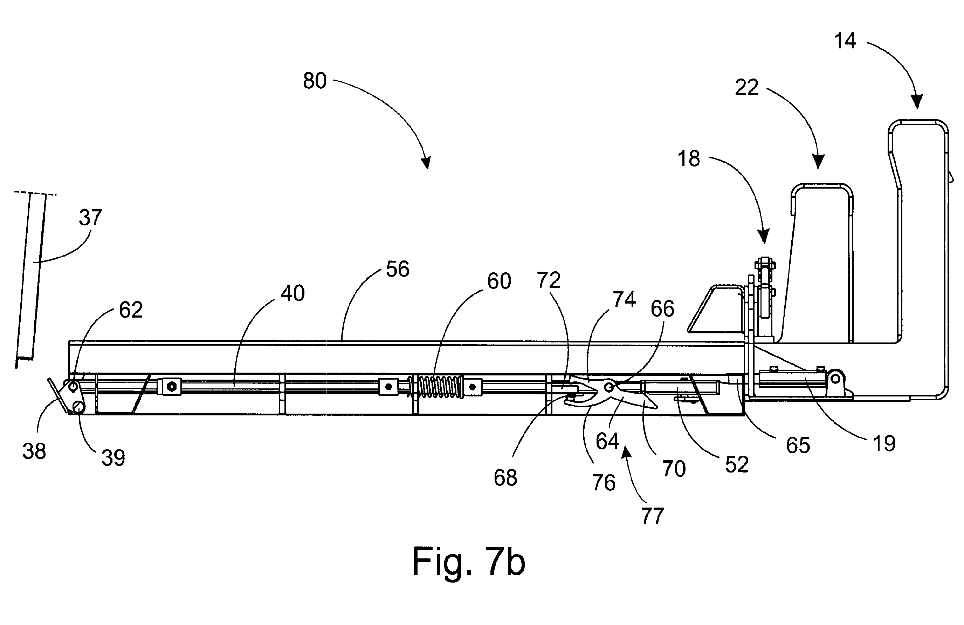

In the final part of the stroke of the actuator 19, the actuator 19 is adapted to push, via the second arm 52, the control arm 40 which turns the latch plunger 38 away from the front of the wall hatch 37, as shown in Figure 7b. As illustrated in Figure 4, the latch plunger 38 can be articulated to the container base 56 by the joint 39 and to the control arm 40 by the joint 62. When pushing the control arm 40, the latch plunger 38 turns relative to the joint 39 turning thereby out of the way of the wall hatch 37. With the latch plunger, the wall hatch that is slightly ajar (here 25 - 50 mm) can be pulled shut after dumping, which facilitates work.

As shown in Figures 5a - 5c, the latch 64 can be manufactured without a lower jaw 76 as well, in which case the latch 64 returns to its lock position due to weight (not shown), for example. The operating principle of the locking mechanism remains the same in this embodiment, too, only the locking method of the latch 64 changes.

When closing the wall hatch, after the piston rod 65 of the actuator 19 has retracted, the return means return the locking mechanism to the lock position. The draw-spring 69 located between the spring hooks 63 pulls the second arm 52 back to the starting position, the return spring 60 pulls the control arm 40 back to the lock position, and the return spring 68 of the latch 64 returns the latch 64 again to the lock position. The return spring of the control arm can be around the control arm, for example. As return means, it is also possible to use other spring operated return means, such as another actuator. Due to the movement of the control arm 40, the latch plunger 38 turns again to the lock position. Locking takes place in the order 6c, 6b and 6a, as shown in the figures.

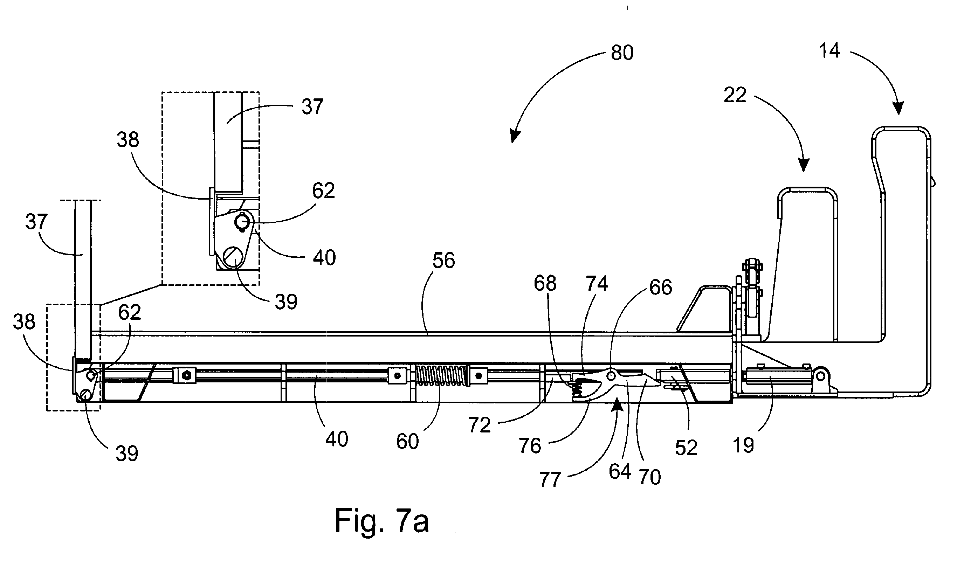

The open and lock positions of the wall hatch locking mechanism 80 are shown in the profile figures 7a and 7b which illustrate the entire unloading device 11. Figure 7a shows a condition in which the wall hatch 37 of the container is locked by the latch plunger 38. For the invention, it is essential that, although the cargo in the container causes a force to act on the wall hatch 37 which tends to open the wall hatch 37, the latch plungers 38 cannot move because the control arm 40 connected to the intermediate joint 58 is forcibly locked by the forcing lock mechanism 77. The control arm 40 cannot move because the upper jaw 74 of the latch 64 articulated thereto is supported to the lock detent 72. The lock detent 72 and the upper jaw 74 receive the forces acting against the latch plungers 38 via the wall hatch 37 such that the return spring 60 of the control arm 40 is not the only element that resists opening of the latch plungers 38. In addition, due to the return spring 60, the latch plungers 38 are capable of pulling the wall hatch completely closed from a slightly open position.

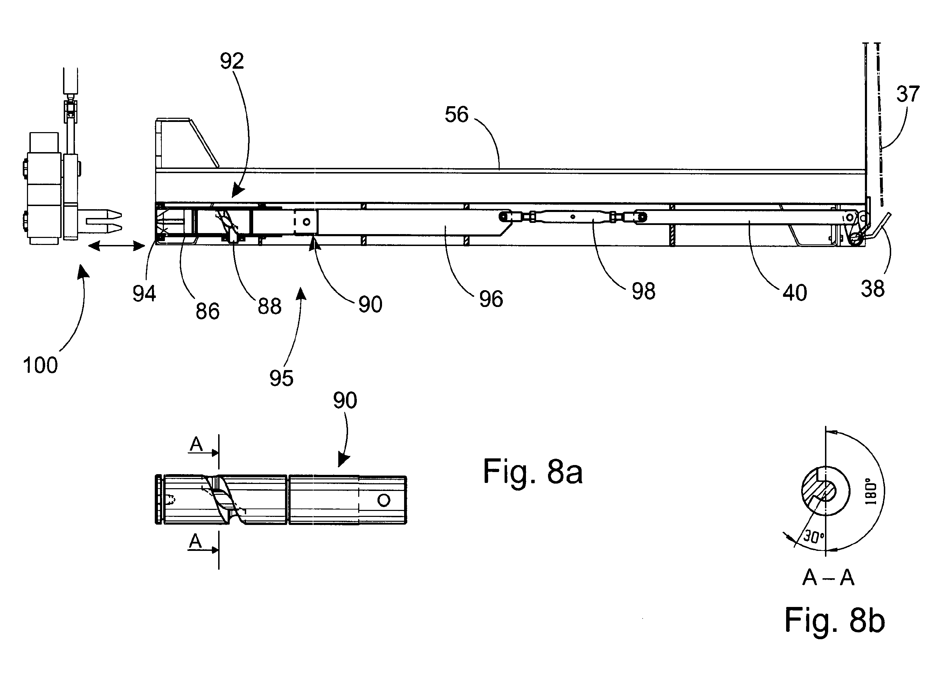

A locking mechanism 95 according to another embodiment is shown in Figures 8a - 8b. Functionally similar parts are referred to with numbering that is consistent with the previous figures. Here the operation of the locking mechanism is based on a screw technique of which a so called self-locking screw is known. In a self-locking screw the rise is smaller than a certain limit value. Thus the screw need not necessarily have a plane, non-rising area for providing forced locking.

In Figure 8a, the container hatch 37 is pulled closed by a latch plunger 38 as in the previous embodiments. The latch plunger 38 is operated by a control arm 40 which in turn is connected to an adjustable turnbuckle screw 98. In turn, the turnbuckle screw 98 is connected to a screw bar 90 with a flat bar iron 96. The screw thread 92 of the screw bar is visible in the enlarged view. The lock mechanism 95 is released by turning the detent 94 of the screw thread 92 by the actuator 100, the detent being connected to a pipe 86 located around the screw bar 90. The pipe 86 is provided with a fixed pin 88 which is in the screw thread 92. When turning the pipe 86, the pin 88 turns as well whereby the screw thread 92 forces the screw bar 90 to move in the longitudinal direction for the amount of the rise of the screw thread 92. The required movement of the screw bar 90 can be provided by turning the pipe 86 by 180°.

Locking of the screw bar 90 is achieved in the plane part of the screw thread 92, which is shown in Figure 8b. The locking mechanism according to the embodiment is locked and opened by the actuator 100. The turnbuckle screw 98 can have a rigid spring integrated therein which enables pulling the wall hatch closed if something interferes in the wall hatch and the wall hatch has remained slightly open in spite of the screw bar movement. The spring is advantageously shorter than the screw bar movement and has such a rigidity that it is capable of pulling the wall hatch closed but does not excessively resist the actuator movement. With this embodiment, too, it is possible to pull closed a wall hatch that is slightly ajar (here 25 - 50 mm) by the latch plunger after dumping, which facilitates work.

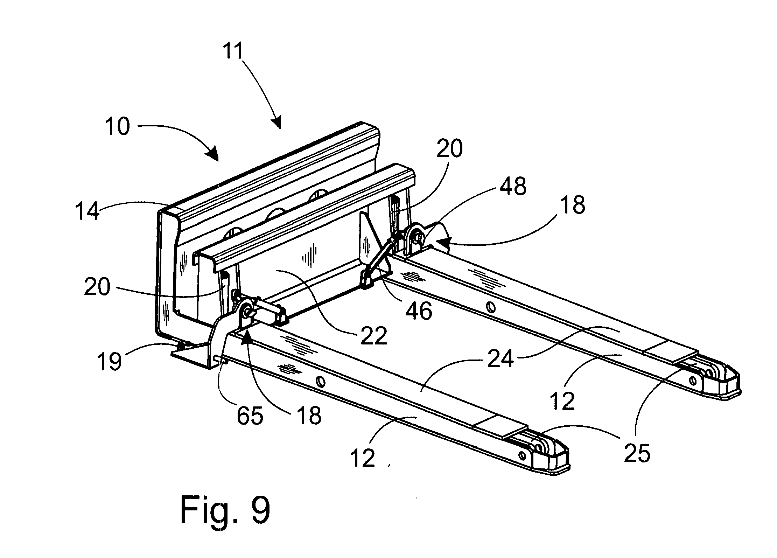

An actuator of an arrangement according to an embodiment is shown in Figure 9 with reference number 19. The actuator of the arrangement is external with respect to the interchangeable platform/container and it can be located in the base of the interchangeable platform/container, which can be a container unloading device or more generally a handling device. The actuator can also be located in a transport pallet, such as in a truck frame. The actuator is adapted to push the opening detent included in the interchangeable platform/container.

The actuators can be one or more in number. The actuator can be a hydraulic cylinder, for example. The actuator receives its driving power from the base to which it is connected, such as from a truck or from a machine via the unloading device, as in Figure 1. The control of the arrangement can be arranged in the cabin of the machine or truck whereby the operator can control the operation of the arrangement from his/her work place.

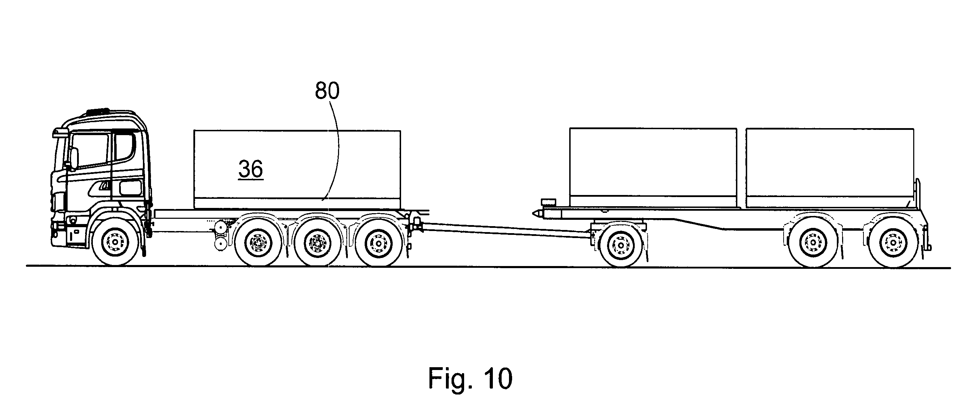

Figure 10 shows an embodiment in which the locking mechanism is associated with an interchangeable platform. With the arrangement, the back board of the interchangeable platform can be reliably and easily locked by controlling the actuator. In this connection, as compressed air is easily available in trucks, the actuator can be a pneumatic cylinder. For the interchangeable platform, the latch plunger can be made slightly hook-like in order that the latch plunger can keep the wall hatch better locked.

The arrangement can be manufactured from such a material that resists stresses acting thereupon even in the long run. According to an embodiment, the length of the locking mechanism is equal to the length of the container base and its height is adapted to fit inside the container base. The size of the container base can vary specifically for each container. In connection with interchangeable platforms, the dimensions of the locking mechanism are determined according to the available space. The containers and interchangeable platforms used in connection with the arrangement are equipped with hinged wall hatches in which the latch plunger of the arrangement will be in the vicinity of the open end of the wall hatch.

## Claims

1. An arrangement (10) for a dumpable interchangeable platform/container (36) wherein the interchangeable platform/container (36) includes a container base (56) and a wall hatch (37) articulated at the top for dumping the interchangeable platform/container (36), **characterized in that** the arrangement (10) further includes
- a latch plunger (38) articulated in the vicinity of said wall hatch (37) and adapted to move against the wall hatch (37), the latch plunger (38) having an open position for releasing the wall hatch (37) and a lock position for keeping the wall hatch (37) closed,
- a control arm (40) for operating said latch plunger (38) adapted to open and close the wall hatch (37), and
- return means (67) for returning said control arm (40) to the lock position,
- a forcing locking mechanism (77) for preventing shifting of said control arm (40) and an actuator (19,100) that operates the forcing locking mechanism (77) for opening the locking mechanism (95), and that said latch plunger (38) is adapted, upon its closing, to push the partially open wall hatch (37) completely closed.

2. An arrangement according to claim 1, **characterized in that** said control arm (40) is articulated to the latch plunger (38) for turning it and the latch plunger (38) is further articulated to the container base (56) in parallel with the articulation of the wall hatch (37).

3. An arrangement according to claim 1 or 2, **characterized in that** said forcing locking mechanism (77) includes a latch (64) articulated to said control arm (40) and a lock detent (72) fastened to the container base (56), wherein said latch (64) is adapted to turn between the open position and the lock position and said lock detent (72) is adapted against the latch (64) in the lock position to prevent shifting of the latch (64) and the control arm (40).

4. An arrangement according to claim 1, **characterized in that** said actuator (19) is adapted to open said locking mechanism (95) in the initial part of its stroke and to open the latch plunger (38) in the final part of its stroke.

5. An arrangement according to claim 1, **characterized in that** said return means (67) are springs (60,68,69).

6. An arrangement according to any of claims 1 - 5 in connection with the handling device/transport means of an interchangeable platform/container (36), **characterized in that** said actuator (19) is located externally in the handling device/transport means relative to the interchangeable platform/container (36) and is adapted to push an opening detent (84) included in the interchangeable platform/container (36).

7. An arrangement according to claim 1, **characterized in that** it comprises a screw thread (92) in the first part and a detent (94) adapted thereto in the second part, the first part being fixed while the second part is adapted to be turned with an external actuator (100) for providing shifting of said control arm (40).

8. An arrangement according to claim 7, **characterized in that** said screw thread (92) ends at a holding part without a rise.

## Patentansprüche

1. Anordnung (10) in Verbindung mit einer kippbaren Wechselpritsche/einem kippbaren Container (36), wobei zu der Wechselpritsche/zu dem Container ein Containeruntersatz (56) und eine oben angelenkte Wandklappe (37) zum Entleeren der Wechselpritsche/des Containers (36) gehören, **dadurch gekennzeichnet, dass** die Anordnung (10) weiter
- eine Schlosszunge (38), angelenkt in Verbindung mit besagter Wandklappe (37) und dazu eingerichtet, sich gegen die Wandklappe (37) zu bewegen, wobei die Schlosszunge (38) eine AUF-Stellung zur Freigabe der Wandklappe (37) und eine ZU-Stellung zum Geschlossenhalten der Wandklappe (37) hat,
- einen Betätigungsarm (40) zum Betätigen der besagten Schlosszunge (38) und damit zum Öffnen und Schließen der Wandklappe (37),
- Rückführmittel (67) zum Zurückführen des besagten Betätigungsarms (40) in Zu-Stellung, und
- einen Zwangsverriegelungsmechanismus (77) zum Verhindern eines Verschiebens des besagten Betätigungsarms (40) und eine den Zwangsverriegelungsmechanismus (77) antreibende Betätigungsvorrichtung (19, 100) zum Öffnen des Verriegelungsmechanismus (95) umfasst, und dass die besagte Schlosszunge (38) dazu eingerichtet ist, beim Sichschließen die teilweise geöffnete Wandklappe (37) völlig zu schließen
umfasst.

2. Anordnung nach Anspruch 1, **dadurch gekennzeichnet, dass** der besagte Betätigungsarm (40) zwecks Drehens der Schlosszunge (38) an diese angelenkt ist, und die Schlosszunge (38) weiter parallel zu der Anlenkung der Wanklappe (37) an den Containeruntersatz (56) angelenkt ist.

3. Anordnung nach Anspruch 1 oder 2, **dadurch gekennzeichnet, dass** der besagte Zwangsverriegelungsmechanismus (77) einen an den besagten Betätigungsarm (40) angelenkten Riegel (64) und einen am/im Containeruntersatz (56) befestigten Schlossanschlag (72) umfasst, wo der besagte Riegel (64) dazu eingerichtet ist, sich zwischen der AUF-Stellung und der ZU-Stellung zu drehen, und der besagte Schlossanschlag (72) in Verriegelungsstellung an dem Riegel (64) anzuliegen eingerichtet ist und so ein Verschieben des Riegels (64) und des Betätigungsarms (40) blockiert.

4. Anordnung nach Anspruch 1, **dadurch gekennzeichnet, dass** die besagte Betätigungsvorrichtung (19) dazu eingerichtet ist, mit dem Anfangsabschnitt ihrer Hublänge den besagten Verriegelungsmechanismus (77) zu öffnen und mit dem Endabschnitt ihrer Hublänge die Schlosszungen (38) zu öffnen.

5. Anordnung nach Anspruch 1, **dadurch gekennzeichnet, dass** die besagten Rückführmittel (67) aus Federn (60, 68, 69) bestehen.

6. Anordnung nach irgendeinem der Ansprüche 1 bis 5 in Verbindung mit einer Handhabungsvorrichtung/einem Transportmittel für eine Wechselpritsche/einen Container (36), **dadurch gekennzeichnet, dass** die besagte Betätigungsvorrichtung (19) in Bezug auf die Wechselpritsche/den Container extern an der Handhabungsvorrichtung/dem Transportmittel angeordnet und dazu eingerichtet ist, gegen den zur Wechselpritsche/zum Container (36) gehörenden Öffnungsanschlag (84) zu drücken.

7. Anordnung nach Anspruch 1, **dadurch gekennzeichnet, dass** sie am ersten Teil eine Schraubenwindung (92) und am zweiten Teil einen dieser Windung (92) angepassten Anschlag (94) umfasst, wobei das eine Teil stationär ist und das andere Teil, um ein Verschieben des besagten Betätigungsarms (40) zu bewirken, durch eine externe Betätigungsvorrichtung (100) drehbar gestaltet ist.

8. Anordnung nach Anspruch 7, **dadurch gekennzeichnet, dass** die besagte Schraubenwindung (92) in einem Halteteil ohne Steigung endet.

## Revendications

1. Arrangement (10) en liaison avec une plate-forme/ un conteneur interchangeable basculable (36), où la plate-forme /le conteneur interchangeable (36) comprend une base de conteneur (56) et une trappe murale (37) pivotée par le haut pour vider la plate-forme / le conteneur interchangeable (36), **caractérisé en ce que** l'arrangement (10) comprend en outre
- un penne de verrou (38) attaché par pivot à proximité de ladite trappe murale (37) disposé de sorte à pouvoir aller contre la trappe murale (37), lequel penne de verrou (38) a une position ouverte pour libérer la trappe murale (37) et une position verrouillée pour maintenir la trappe murale (37) fermée,
- un bras de manoeuvre (40) pour commander ledit penne de verrou (38) disposé de sorte à ouvrir et fermer la trappe murale (37),
- et des moyens de retour (67) pour remettre ledit bras de manoeuvre (40) dans la position verrouillée,
- un mécanisme de verrouillage forcé (77) pour empêcher le déplacement dudit bras de manoeuvre (40) et un actionneur (19,100) pour commander le mécanisme de verrouillage forcé (77) pour ouvrir le mécanisme de verrouillage (95), et que ledit penne de verrou (38) est disposé de sorte à appuyer, en se fermant, sur la trappe murale (37) partiellement ouverte de sorte à la fermer complètement.

2. Arrangement selon la revendication 1, **caractérisé en ce que** ledit bras de manoeuvre (40) est attaché par pivot au penne de verrou (38) pour tourner ce dernier et le penne de verrou (38) est en outre attaché par pivot à la base du conteneur (56) parallèlement à l'articulation de la trappe murale (37).

3. Arrangement selon la revendication 1 ou 2, **caractérisé en ce que** ledit mécanisme de verrouillage forcé (77) comprend un verrou de maintien (64) attaché par pivot audit bras de manoeuvre (40) et un cliquet de verrouillage (72) attaché à la base de conteneur (56), où ledit verrou de maintien (64) est disposé de sorte à tourner entre la position ouverte et la position verrouillée et ledit cliquet de verrouillage (72) est positionné contre le verrou de maintien (64) dans la position de verrouillage empêchant ainsi le déplacement du verrou de maintien (64) et du bras de manoeuvre (40).

4. Arrangement selon la revendication 1, **caractérisé en ce que** ledit actionneur (19) est disposé de sorte à ouvrir ledit mécanisme de verrouillage (95) lors de la partie initiale de sa course et ouvrir le penne de verrou (38) lors de la partie finale de sa course.

5. Arrangement selon la revendication 1, **caractérisé en ce que** lesdits moyens de retour (67) sont des ressorts (60,68,69).

6. Arrangement selon l'une quelconque des revendications 1 à 5 en liaison avec l'appareil de manoeuvre / les moyens de transport d'une plate-forme / d'un conteneur interchangeable (36), **caractérisé en ce que** ledit actionneur (19) est situé à l'extérieur dans l'appareil de manoeuvre / les moyens de transport relatifs à la plate-forme / au conteneur interchangeable (36) et disposé de sorte à appuyer sur un cliquet d'ouverture (84) faisant partie de la plate-forme / du conteneur interchangeable (36).

7. Arrangement selon la revendication 1, **caractérisé en ce qu'**il comprend un filetage (92) dans la première partie et une détente (94) adaptée à celui-ci dans la deuxième partie, la première partie étant fixe et la deuxième partie étant disposée de sorte à pouvoir être tournée à l'aide d'un actionneur extérieur (100) pour déplacer ledit bras de manoeuvre (40).

8. Arrangement selon la revendication 7, **caractérisé en ce que** ledit filetage (92) se termine par une section de maintien sans montée.
